# EUROPÄISCHE PATENTSCHRIFT

(11) **EP 1 404 208 B1**
(45) Veröffentlichungstag und Bekanntmachung des Hinweises auf die Patenterteilung: **13.09.2006**
(21) Anmeldenummer: 02758300.4
(22) Anmeldetag: 03.07.2002
(51) Int. Cl.: A47L 15/42, A47L 15/23, F16K 11/085, F16K 15/18, F04D 15/00

(54) **GESCHIRRSPÜLMASCHINE MIT SPRÜHARMEN UND MIT EINER UMWÄLZPUMPE**
DISHWASHER COMPRISING SPRAYING ARMS AND A CIRCULATING PUMP
LAVE-VAISSELLE A BRAS GICLEURS ET POMPE DE RECIRCULATION

(30) Priorität: 07.07.2001 DE 10133130
(43) Veröffentlichungstag der Anmeldung: 07.04.2004
(73) Patentinhaber: Miele & Cie. KG, 33332 Gütersloh (DE)
(72) Erfinder: ASSMANN, Walter, 33739 Biefeld (DE); HETTENHAUSEN, Ulrich, 33739 Biefeld (DE); MARKS, Volker, 33611 Biefeld (DE)
(86) Internationale Anmeldenummer: PCT/EP2002/007347
(87) Internationale Veröffentlichungsnummer: WO 2003/005875

(56) Entgegenhaltungen:
- EP-A- 0 585 905
- EP-A- 0 795 292
- WO-A-01/58335
- DE-A- 3 810 648
- DE-A- 4 418 153
- DE-A- 19 857 103
- GB-A- 771 562
- US-A- 4 679 983

## Beschreibung

Die Erfindung betrifft eine Geschirrspülmaschine mit Sprüharmen und mit einer Umwälzpumpe, die ein Laufrad, einen Ansaugstutzen und mindestens einen Druckstutzen am Pumpengehäuse aufweist, mit einer pumpendruckseitig vorgesehenen Wasserweiche zur Herstellung eines Durchflusses von einem Einlass auf einen von mehreren wählbaren, den Sprüharmen zugeordneten, Auslässen, wobei die Wasserweiche ein Sperrelement mit mindestens einer Blendenöffnung besitzt, welche durch eine Antriebsvorrichtung in mindestens eine Auslassstellung positionierbar ist.

Die in wasserführenden Geräten, insbesondere in Geschirrspülmaschinen für Haushalt oder Gewerbe für den Spülwassertransport eingesetzten Umwälzpumpen sind in aller Regel unten am Spülbehälter montierte Kreiselpumpen. Mit einer solchen Pumpe wird die Spülflüssigkeit im Kreislauf aus dem Spülbehälter abgepumpt und in diesen über die Sprüharme des Systems und das zu spülende Geschirr wieder zurückgeführt. Für einen wirtschaftlichen und energiesparenden Betrieb ist es dabei allgemein bekannt, die Zufuhr der Spülflüssigkeit zu den Sprüharmen in Abhängigkeit von der Geschirrkorbbeladung im Spülbehälter und/oder von der Geschirrart programmabhängig zu steuern. So ist es beispielsweise üblich, die von der geräteeigenen Umwälzpumpe im Kreislauf geförderte Spül- oder Reinigungsflüssigkeit wechselweise den korbzugeordneten Sprüharmen zuzuführen oder aber bestimmte Sprüharme, z. B. den unteren Sprüharm bei nicht beladenem Unterkorb, von der Spülwasserversorgung zu trennen.

Das Umschalten auf den einen oder anderen Sprüharm bzw. das vollständige Unterbrechen von Wasserwegen im Spülsystem regelt programmgesteuert in bekannter Weise eine sog. Wasserweiche (vergl. DE 88 16 597 U1), welche der Umwälzpumpe pumpendruckseitig nachgeschaltet ist.

Bei einer Umwälzpumpe mit nur einem sich hinter der Pumpe zum oberen und unteren Sprüharmzufluss verzweigenden Druckstutzen ist es üblich, die Wasserweiche im Verzweigungspunkt anzuordnen, wobei diese entsprechend dem voreingestellten Spülprogramm entweder den oberen, den unteren oder beide Sprüharme mit Spülflüssigkeit versorgt. Sind beispielsweise drei oder mehr Sprüharme vorgesehen, von denen wenigstens einer immer beaufschlagt werden soll, so kann die Wasserweiche auch in einer abzweigenden Sprüharmzuführung als weitere schaltbare Leitungsverzweigung angeordnet sein.

Eine Geschirrspülmachine mit einer derartigen Wasserweiche ist zum Beispiel aus der EP 0 585 905 A bekannt.

Ferner offenbart die DE 75 14 342 U1 eine Pumpe, die über ihre Druckstutzen mit hydraulischen Aggregaten z.B. Steuerzylinder, Entlüftungsvorrichtung, Zumischer usw. verbunden ist. Um die angeschlossenen Aggregate abschalten zu können, ist eine Absperrvorrichtung vorgesehen. Die Absperrvorrichtung weist plattenförmige Sperrelemente auf, welche an einem Bügel befestigt sind. Der Bügel ist mit seinen Sperrelementen in der Pumpenkammer angeordnet und kann über einen außerhalb der Pumpe vorgesehenen Handhebel zum Sperren bzw. Öffnen der Druckstutzen in Umfangsrichtung bewegt werden, wobei die Sperrelemente so angeordnet sind, dass entweder alle Druckstutzen geöffnet oder alle geschlossen sind.

Auch die DE 2114978 beschreibt eine Pumpe mit in ihrer Pumpenkammer angeordneten Sperrelementen, welche über einen Bügel miteinander verbunden sind. Die Sperrelemente, vorzugsweise zwei, befinden sich jeweils vor einem umfangsseitig vorgesehenen Druckstutzen. Mittels einer Stange, welche mit einem Sperrelement verbunden ist und aus einer Bohrung des Pümpengehäuses hinausragt, kann das Sperrelement in die Pumpenkammer hineingedrückt werden und der entsprechende Druckstutzen freigegeben werden, während das Sperrelement auf der anderen Seite des Bügels den entsprechenden Druckstutzen verschließt.

Ausgehend vom vorgenannten Technikstand stellt sich der Erfindung die Aufgabe bei einer Geschirrspülmaschine der eingangs genannten Art das Strömungssystem Wasserweiche /Pumpe so auszubilden, dass es einen hohen hydraulischen Wirkungsgrad aufweist.

Erfindungsgemäß wird die Aufgabe bei einer Geschirrspülmaschine der eingangs genannten Art dadurch gelöst, dass die Wasserweiche in die Umwälzpumpe derart integriert ist, dass der Einlass der Wasserweiche durch den Ansaugstutzen der Umwälzpumpe und der Auslass der Wasserweiche durch mehrere Druckstutzen der Umwälzpumpe gebildet ist, und dass die Geometrie und die Anordnung des Sperrelements in der Umwälzpumpe derart ist, dass durch Drehen des Sperrelements in seine Umfangsrichtung die gewünschte Auslassstellung erreicht wird.

Dadurch wird der Vorteil erzielt, dass das Bau- und Totvolumen der Umwälzpumpe und der Wasserweiche zusammen nahezu gleich wie bei einer Umwälzpumpe ohne Wasserweiche ist. Demgemäß wird erreicht, dass Bauraum im ohnehin schon voll bestückten Gerät eingespart wird und der hydraulische Wirkungsgrad im Gerät erhöht wird. Darüber hinaus werden die Verbindungsleitungen zwischen der Pumpe und der Wasserweiche eingespart. Bei der Drehung des Sperrelements in seine Umfangsrichtung entstehen keine großen Kräfte, da die Drehrichtung den Pumpendruck nicht entgegengesetzt ist. Deshalb können vorteilhaft relativ preiswerte Materialien für die Wasserweiche, die geringen Festigkeitsanforderungen genügen, eingesetzt werden.

In einer vorteilhaften Weiterbildung sind die Blendenöffnungen vom Sperrelement und die Öffnungen der Druckstutzen so gewählt, dass die Blendenöffnungen vom Sperrelement und die Öffnungen der Druckstutzen auch während der Drehung des Sperrelements in eine der Ausgangsstellungen die von dem Sperrelement freigegebenen Querschnittsflächen aller Druckstutzen in Summe konstant sind. Durch konstant bleibende Querschnittsflächen wird erreicht, dass die Pumpe eine konstante Umwälzmenge fördert, so dass ein Ansaugen von Luft und eine daraus resultierende Schaumbildung, welche ihrerseits das Spülergebnis verschlechtern würde, vermieden wird. Darüber hinaus wird durch eine konstant geförderte Umwälzmenge der Geräuschpegel beim Spülen konstant gehalten.

Gemäß einer weiteren vorteilhaften Ausbildung der Erfindung, ist das Sperrelement topfförmig mit einem Boden oder ringförmig ohne Boden an der umlaufenden Sperrelementwand ausgebildet. Diese Geometrie des Sperrelements ist besonders vorteilhaft, da die Strömung auf ihrem Weg zu dem oder den Druckstutzen unbehindert strömt.

Auch ist die Anzahl der Weichenstellungen der Wasserweiche durch die vorteilhaften konstruktiven Ausgestaltungen der Erfindung insbesondere durch das im Druckraum der Pumpe vor den abzweigenden Druckstutzen angeordnete Sperrelement zum Sperren und Freigeben der Druckstutzen für Spülflüssigkeit einfach variierbar. Die sichere Verstellbewegung und lagestabile Festsetzung des Sperrelements in der jeweiligen Wasserweichenstellung besorgt dabei die außerhalb oder innerhalb des Druckraumes befindliche Antriebsvorrichtung für das Sperrelement, die vorteilhaft durch einen außen am Pumpengehäuse vorgesehenen Elektromotor und ein Zahngetriebe realisiert ist. Eine so ausgebildete Umwälz- oder Kreiselpumpe ist auch vorteilhaft überall dort einsetzbar, - also losgelöst von Geschirr- oder Waschmaschinen -, wo Wasserwege eines Wasserverteiler-Systems einzeln, wahlweise oder auch gemeinsam mit Flüssigkeit versorgt werden müssen. Umwälzpumpen nach dieser Erfindung sind universell verwendbar, insbesondere auch separat im Heizungsbau.

Ausführungsbeispiele der Erfindung sind in den Zeichnungen dargestellt und werden nachfolgend näher beschrieben. Es zeigt
- Figur 1: eine insbesondere bei Geschirrspülmaschinen verwendbare Umwälzpumpe mit einem Ansaugstutzen, drei Druckstutzen und einer integrierten Wasserweiche, in perspektivischer Darstellung,
- Figur 2: die im Spülwassersystem der schematisch dargestellten Geschirrspülmaschine installierte Umwälzpumpe,
- Figur 3: die geöffnete Umwälzpumpe in der Draufsicht mit der Anordnung des Sperrelements der Wasserweiche im Pumpendruckraum,
- Figur 4: das Sperrelement mit Öffnungen und Verschlusselementen für die Druckstutzen in perspektivischer Darstellung,
- Figur 5: die Umwälzpumpe mit einer aus dem Sperrelement und einer Antriebsvorrichtung bestehenden integrierten Wasserweiche nach einem ersten Ausführungsbeispiel, im Längsschnitt,
- Figur 6: das Sperrelement in Wirkverbindung mit einem Getriebe des Wasserweichenantriebs,
- Figur 7: die Umwälzpumpe mit der integrierten Wasserweiche mit einer teilgeschnittenen Antriebsvorrichtung gemäß einem weiteren Ausführungsbeispiel, in der Vorderansicht,
- Figur 8: die Umwälzpumpe nach Fig. 7 im Längsschnitt,
- Figur 9: die geöffnete Umwälzpumpe in der Draufsicht mit dem Sperrelement der Wasserweiche in einer anderen Drehposition und
- Figur 10: das Sperrelement in einer weiteren Ausbildung von Verschlusselementen.

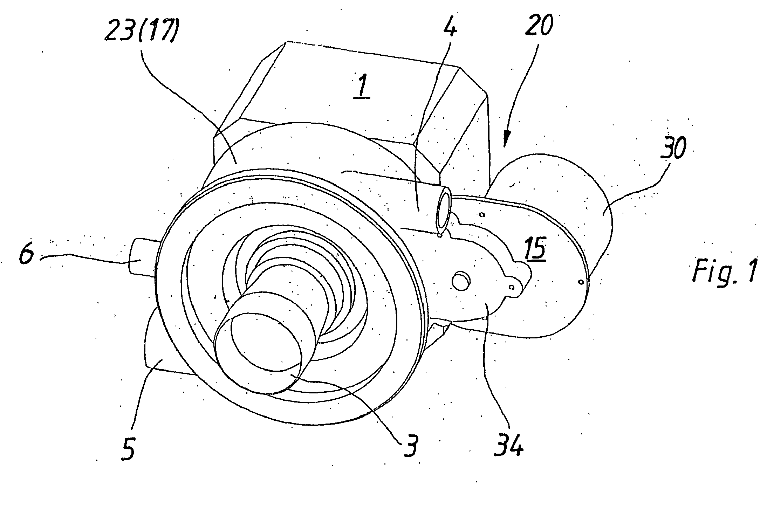

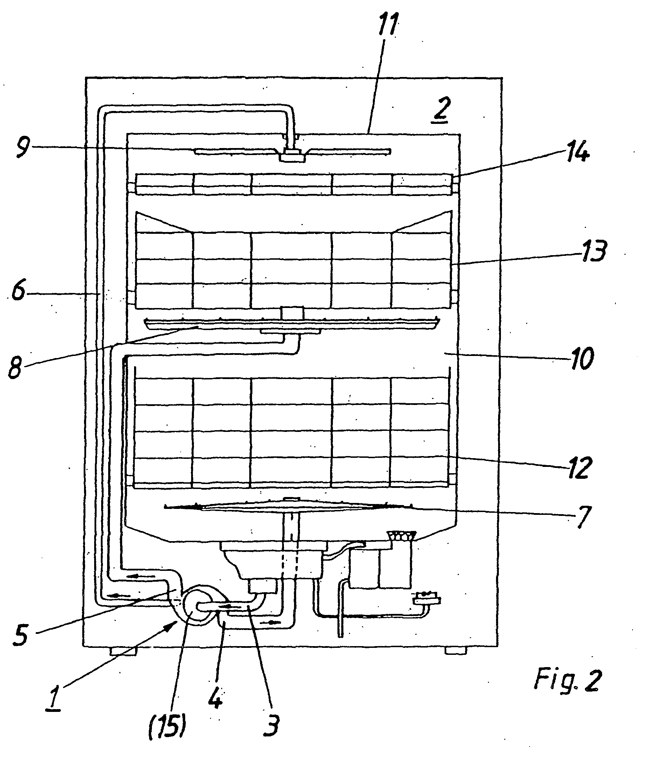

Eine in Fig. 1 dargestellte Umwälzpumpe (1) insbesondere für eine Geschirrspülmaschine (2), sh. Fig. 2, weist einen Ansaugstutzen (3) für Spülflüssigkeit und drei separate Druckstutzen (4, 5, 6) am Pumpengehäuse (23) auf, welche zur Beaufschlagung der Sprüharme (7, 8, 9) der in Fig. 2 schematisch dargestellten Geschirrspülmaschine (2) mit der Spülflüssigkeit mit zugeordneten Sprüharmzuleitungen zu verbinden sind.

Mit der als Kreiselpumpe ausgebildeten Umwälzpumpe (1) wird die Spülflüssigkeit bei der Geschirrspülmaschine (2) im Kreislauf aus dem Spülbehälter (10) abgepumpt und in diesen über die drei Sprüharme (7 bis 9) des Systems und das zu spülende Geschirr wieder zurückgeführt. Dabei ist jedem Sprüharm (7, 8 bzw. 9) ein separater Druckstutzen (4; 5 bzw. 6) der Umwälzpumpe (1) zugeordnet. So wird beispielsweise der dem Unterkorb (12) zugeordnete Sprüharm (7) vom Druckstutzen (4) und der Oberkorb (13) für Spülgut vom Druckstutzen (5) mit Spül- oder Reinigungsflüssigkeit versorgt. Den oberen an der Spülraumdecke (11) der Geschirrspülmaschine (2) installierten Sprüharm (9) hingegen versorgt der dritte Druckstutzen (6) der Umwälzpumpe (1). Dieser separate Sprüharm ist einem im Spülbehälter (10) in der obersten Spülebene angeordneten flachen Korb (14) für zu spülende Besteckteile zugeordnet. Entsprechende Sprüharmzuleitungen stellen die Verbindung zwischen den Druckstutzen (4 bis 6) und den Sprüharmen (7 bis 9) her.

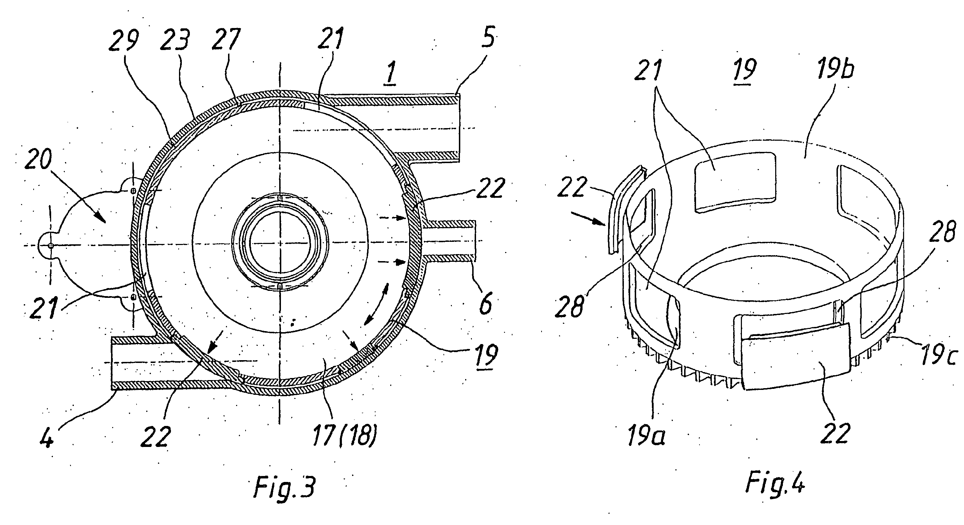

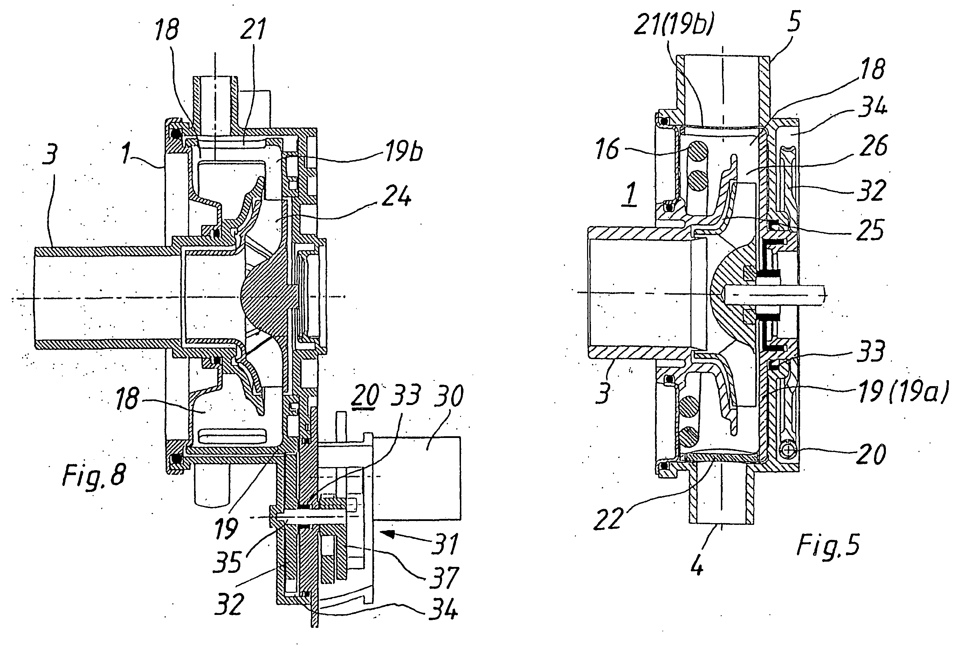

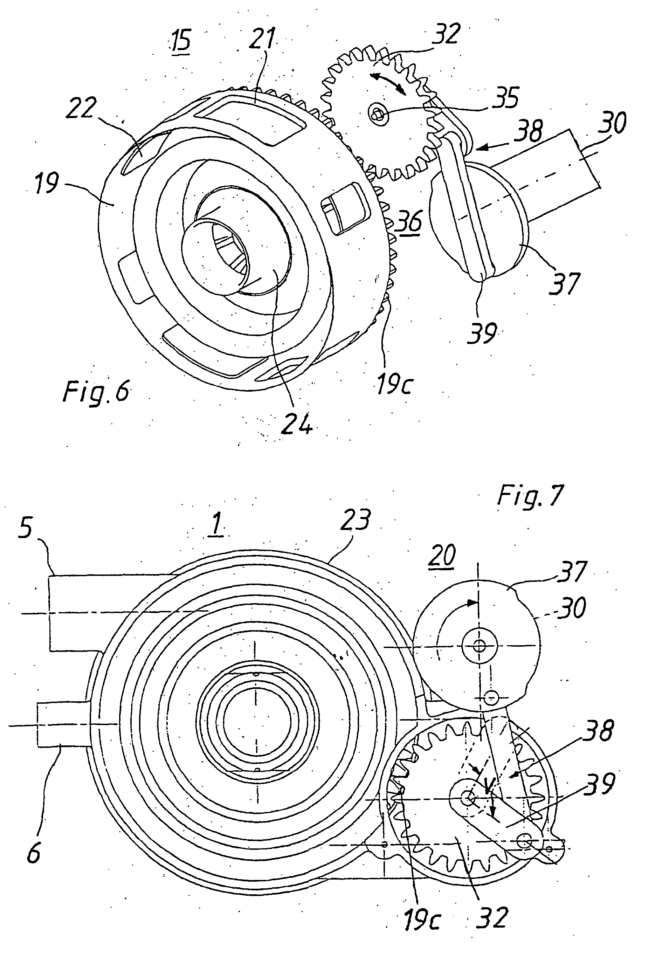

Für einen wirtschaftlichen und energiesparenden Spülbetrieb kann programmgesteuert die Zufuhr der Spülflüssigkeit zu den Sprüharmen (7 bis 9) in Abhängigkeit von der Geschirrkorbbeladung im Spülbehälter und/oder von der Geschirrart beeinflusst werden. Dies kann so gesteuert sein, dass die im Kreislauf geförderte Spül- oder Reinigungsflüssigkeit wechselweise den korbzugeordneten Sprüharmen (7 bis 9) zugeführt wird, oder aber ein bestimmter Sprüharm (7, 8 bzw. 9) der Geschirrspülmaschine (2), z. B. der untere Sprüharm (7), wird bei nicht beladenem Unterkorb (12) von der Spülwasserversorgung getrennt, d. h. die Spülwasserzufuhr zum dafür vorgesehenen Druckstutzen (4) wird unterbrochen. Das Umschalten auf den einen oder anderen Sprüharm (7, 8, 9) bzw. das vollständige Unterbrechen von Wasserwegen bei einem Spülprogramm bewirkt programmgesteuert eine Wasserweiche (15), welche erfindungsgemäß in die Umwälzpumpe (1) integriert ist. Siehe Fig. 2 bis 10 und insbesondere Fig. 6.
Ein eingewähltes Spülprogramm mit Geschirrtrocknung beinhaltet Kaltwasserspülgänge (Vorspülen, Zwischenspülen) und Warmwasserspülgänge (Reinigen, Klarspülen), wobei je nach Geschirrverschmutzung auch Progammabschnitte, z. B. das Vorspülen oder Zwischenspülen zusätzlich ein- oder ausgeblendet werden können. Bei den Warmwasserspülgängen wird die im Spülbehälter (10) umlaufende Spül- oder Reinigungsflüssigkeit von der geräteeigenen Heizungseinrichtung erwärmt. Die Heizungseinrichtung kann als separater Durchlauferhitzer im oder außerhalb des Spülbehälters (10) ausgebildet sein, oder aber auch in die Umwälzpumpe (1) integriert sein. Letztere Bauform ist in Fig. 5 realisiert und reduziert vorteilhaft bereitzustellenden Einbauraum im Gerät. Die nachstehende Beschreibung behandelt in den Fig. 3 bis 10 die Anordnung und Ausbildung der Baueinheiten der erfindungsgemäßen Wasserweiche (15) in einer Umwälzpumpe (1), wobei auch eine Umwälzpumpe (1) mit einer integrierten Heizungseinrichtung (16) gemäß Fig. 5 Verwendung findet.

Gemäß Fig. 3 und 6 besteht die Wasserweiche (15) aus einem in der Pumpenkammer (17), insbesondere im Druckraum (18) der Pumpe vor den abzweigenden Druckstutzen (4, 5, 6) angeordneten Sperrelementen (19) zum Sperren und Freigeben der Druckstutzen (4, 5, 6) für Spülflüssigkeit sowie aus einer vorzugsweise außerhalb des Druckraumes (18) befindlichen Antriebsvorrichtung (20) für das Sperrelement (19). Die Fig. 3 verdeutlicht dies bei der gemäß Fig. 1 beschriebenen Umwälzpumpe (1), deren Pumpenkammer (17) geöffnet dargestellt ist. Die Draufsicht zeigt die Anordnung des Sperrelements (19) im Pumpen-Druckraum (18). Es ist auch möglich, die Antriebsvorrichtung (20) in den Pumpenraum zu verlegen, wie an späterer Stelle noch näher beschrieben ist.

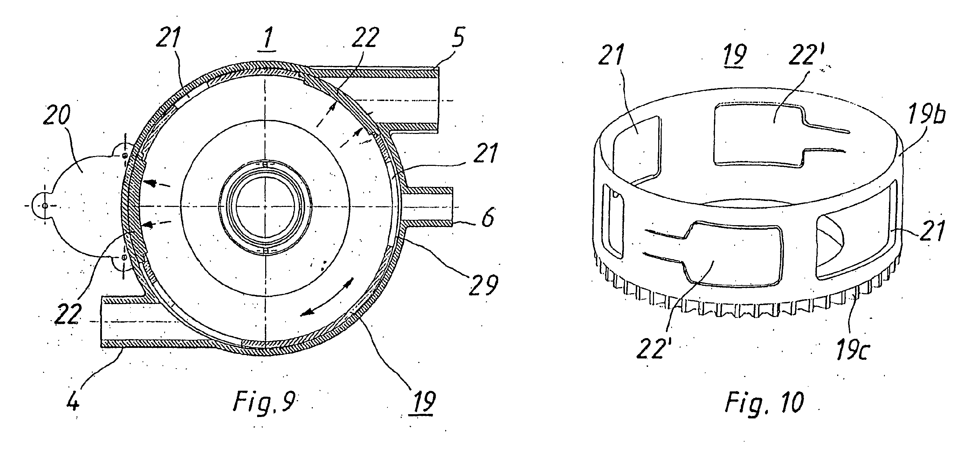

Das drehbeweglich in der Pumpenkammer (17) gelagerte Sperrelement (19) ist nach Fig. 4 für eine wahlweise Freischaltung der Druckstutzen (4 bis 6) mit einer oder mehreren. Blendenöffnungen (21) zwischen ein oder mehreren beweglichen Verschlusselementen (22) mit Ventilfunktion für das programmgesteuerte Sperren der Druckstutzen (4 bis 6) ausgebildet. Die Verschlusselemente (22) werden entsprechend der vorgegebenen Druckstutzenverteilung am Pumpengehäuse (23) und der wählbaren Anschaltung der Stutzen an den Spülwasserkreislauf am Sperrelement (19) zwischen den Blendenöffnungen (21) vorgesehen. Das Sperrelement (19) ist vorzugsweise in seiner Drehrichtung reversierbar drehbeweglich, sh. auch Pfeile, Fig. 3 und 6. Es können auch weniger (beispw. 2) oder mehr als drei Druckstutzen an der Umwälzpumpe (1) vorgesehen werden. Die Fig. 3 zeigt das Sperrelement (19) in einer Drehstellung, bei welcher nur der Druckstutzen 5 für den mittleren Sprüharm 8 freigeschaltet ist. Dies ist eine Programmvariante, bei welcher nur Geschirr im Oberkorb geladen ist, welches gespült werden soll. Da alle übrigen Körbe nicht beladen sind, kann hier auf die Freischaltung der betreffenden Sprüharme (7, 9) bzw. Druckstutzen (4, 6) verzichtet werden. Hingegen sind in Fig. 9 die beiden Druckstutzen (4, 6) freigeschaltet, so dass unten und oben gespült werden kann. Die Druckstutzenbelegung ist durch die Anordnung der Verschlusselemente somit wählbar.

Die Umwälzpumpe (1) nach Fig. 3 mit der erfindungsgemäß integrierten Wasserweiche (15) besitzt eine das Laufrad (24) der Umwälzpumpe (1) - in Fig. 3 nicht gezeigt - rotationssymmetrisch umgebende Pumpenkammer (17) in Kreisform. Vorteilhaft ist dabei dieser Raum, sh. Fig. 5 bzw. 8, in einen strömungsintensiven Laufradraum (25) und in einen diesem Laufradraum (25) nachgeordneten schaufellosen Ringdiffusorraum (26) sowie in den dem Diffusor nachgeschalteten Druckraum (18) unterteilt. Dieser Druckraum (18) ist strömungsberuhigt. Von diesem Druckraum (18) zweigen die Druckstutzen (4 bis 6) der Umwälzpumpe (1) ab. Der Raum nimmt auch das entsprechend der Kreisform der Pumpenkammer (17) topfförmig mit einem Boden (19a) und einer umlaufenden Sperrelementwand (19b) ausgebildeten Sperrelement (19) der Wasserweiche (15) auf, vergl. Fig. 5 und 8. Das Sperrelement (19) taucht annähernd formschlüssig in den Druckraum (18) ein, wobei die Blendenöffnungen (21) sowie die beweglichen Verschlusselemente (22) am Sperrelementumfang der Druckraumwand (27) benachbart ausgebildet sind. Wird die Umwälzpumpe (1) zusätzlich mit der Heizungseinrichtung (16) nach Fig. 5 ausgerüstet, so befindet sich diese vorteilhaft ebenfalls in dem strömungsberuhigten Druckraum (18) vor der Sperrelementwand (19b).

Die Verschlusselemente (22) gemäß Fig. 4 sind separat in vorgesehene Öffnungen (28) der Sperrelementwand (19b) formschlüssig einsteckbare Losteile und werden jeweils von außen (sh. Fig. 5) in die vorgesehenen Öffnungen (28) am Sperrelementumfang eingesetzt. Die Verschlusselemente (22) weisen jeweils einen umlaufenden Rand auf, welcher bei eingesetztem Verschlusselement (22) die zugeordnete Öffnung (28) etwas überragt. Der umlaufende Rand (sh. Fig. 3) verhindert, dass die eingesetzten Verschlusselemente (22) nach innen in das Sperrelement (19) hindurchfallen. Bei entsprechendem Freischnitt der Sperrelementwand (19b) wäre auch das Einsetzen der Verschlusselemente (22) von oben her möglich.

Die Verschlusselemente (22) sind radial beweglich, siehe Pfeile Fig. 3 und 9, in Richtung der Druckstutzenöffnungen bzw. der angrenzenden Druckraumwand (27) im kreisrunden Sperrelement (19) gelagert und strömungsgesteuert. Bei laufender und fördernder Umwälzpumpe (1) werden die Verschlusselemente (22) aus ihrem Ventilsitz (Öffnung 28) von innen nach außen gedrängt, wobei sie spülprogrammabhängig die Druckstutzen (4, 5, 6) und benachbarte Pumpengehäusewahdabschnitte abdichten. Zwischen der Pumpenkammerwand (27) und der parallelen Wand (19b) des Sperrelements (19) ist ein Dichtspalt (29) für die beweglichen Verschlusselemente (22) vorgesehen. Der Dichtspalt (29) verhindert auch ein Verklemmen des vor und zurück bzw. nur in einer Richtung rotierbaren Sperrelements (19) der Wasserweiche (15).

Die vom Pumpendruck in Richtung der Druckraumwand (27) bewegten Verschlusselemente bilden zusätzlich Leckwasser-Dichtzonen an den benachbarten Pumpengehäusewänden zwischen benachbarten Druckstutzen (4, 5, 6), sh. z. B. Fig. 3 oder 5, so dass vorteilhaft Verwirbelungen im Pumpenraum, insbesondere im Dichtungsspalt (29) zwischen der Sperrelementwand (19b) und der angrenzenden Pumpengehäusewand (27) vermieden werden.

Zur unverlierbaren Befestigung am Sperrelement (19) können die Verschlusselemente (22) mit Schnapp- oder Rastverbindungen (nicht dargestellt) ausgebildet werden. Auch ist eine Konstruktion möglich, bei welcher Verschlusselemente (22') mit dem Sperrelement (19) einstückig ausgebildet sind. Dies kann derart sein, dass die Verschlusselemente (22') in Form von Folienscharnieren oder dergl. am Sperrelement (19) angebunden sind, oder die Verschlusselemente (22) sind in der Sperrelementwand (19b) freigeschnittene federnde Ventilelemente (22') gemäß Fig. 10, die ebenfalls vom Wasserdruck gesteuert werden.

Sollen bei einer Umwälzpumpe (1) die Druckstutzen entgegen der hier gezeigten radialen Anordnung der Stutzen am Pumpengehäuse in einer axialen Anordnung vorgesehen werden, so wären die Blendenöffnungen (21) bzw. die Verschlusselemente (22) in einer entsprechenden achsparallelen Wand des Sperrelements (19), beispielsweise in einem an der Sperrelementwand (19b) angeformten oberen Boden gleichwirkend auszubilden.

Die anfangs in Fig. 1 schon genannte Antriebsvorrichtung (20) für das Sperrelement (19) der Wasserweiche (15) ist mechanisch, vorzugsweise elektromechanisch mit einem außen am Pumpengehäuse (23) vorgesehenen Elektromotor (30) mit ggf. nachgeschaltetem Getriebe (31), Fig. 5 bis 8, realisiert. Dafür ist das Sperrelement (19) bzw. dessen Sperrelementwand (19b) oder Topfboden (19a) mit einer die Pumpenkammer (17) durchdringenden Verzahnung (19c) versehen, welche mit einem Ritzel (32) des Getriebes (31) außerhalb der Pumpenkammer (17), Fig. 7, in einem nach außen hin mittels einer Dichtung (33) abgedichteten Getrieberaum (34) des Antriebs (20) kämmt. Die Antriebsachse (35) des Ritzels (32) ist flüssigkeitsdicht, vgl. Fig. 8, aus dem Pumpengehäuse (23) zur Ankopplung des Elektromotors (30) herausgeführt.

Die reversierbare Drehbewegung des angetriebenen Sperrelements (19) erfolgt durch den in seiner Drehrichtung umkehrbaren Elektromotor (30), obgleich die Drehbewegungsumkehr ebenso bei einem in nur einer Drehrichtung laufendem Antriebsmotor auch durch ein Kulissengetriebe (nicht dargestellt) oder durch einen zwischen Getriebe (31) und Elektromotor (30) angeordneten Kurbeltrieb (36) erfolgen könnte, wie in den Fig. 6 und 7 ausgeführt. Der Kurbeltrieb (36) besteht aus einer vom Elektromotor antreibbaren Kurbelscheibe (37) in Wirkverbindung mit einem Pleueltrieb (38). Dieser Pleueltrieb (38) ist mit der Antriebsachse (35) des Ritzels (32) des Zahngetriebes (31) drehverbunden.

Zur Lagesensierung und/oder Endlagenabschaltung des Sperrelements (19) kann die Wasserweiche (15) mit mechanischen oder elektrischen Sensoren versehen werden, welche auf die Programmsteuerung des Gerätes bzw. die Antriebssteuerung wirken. Solche Einrichtungen zur Sensierung der Drehlage des Sperrelements (19) können durch ein oder mehrere am Umfang der Kurbelscheibe (37), am Ritzel (32) oder dergl. vorgesehene Schaltnocken, Dauermagnete oder dergl. realisiert werden, welche entsprechend zugeordnete Schalter der Ansteuereinrichtung berührungslos oder durch Kontakt zur Steuerung der Drehbewegung des Sperrelements (19) beeinflussen. Die jeweils richtige Position des Sperrelements (19) in Bezug auf die freizugebenden oder zu schließenden Druckstutzen (4 bis 6) kann aber auch durch gezieltes An- und Ausschalten des Antriebsmotors durch das Programmwerk der Geschirrspülmaschine erfolgen, wobei als Antriebsmotor beispielsweise ein elektrischer Schrittmotor eingesetzt werden kann.

Die Antriebsvorrichtung für das Sperrelement (19) kann auch hydraulisch vom Fördermedium selbst erfolgen. Auch ist eine berührungslos mittels Magnetkraft durchgeführte Verdrehung des Sperrelements (19) möglich. Zweckmäßig könnte auch der Pumpenmotor, insbesondere das Pumpenlaufrad (24) der Umwälzpumpe (1) als Antriebsvorrichtung (20) verwendet werden.

Die Ausführung der Wasserweiche (15) mit dem Kurbeltrieb (36) gemäß Fig. 6 bis 8 ist vorteilhaft, da auch nach längeren Stillstandzeiten des Systems ein mögliches Verkleben des Sperrelements die Funktion des Antriebs nicht behindert oder erschwert. Der Elektromotor (30) treibt die Kurbelscheibe (37) an. Diese dreht sich nur in eine Richtung. Mit Hilfe des Pleueltriebs (38) wird der Hebel (39) um den Verdrehwinkel (V) hin und her bewegt. Der Hebel (39) ist über die Antriebsachse (35) mit dem im Nassbereich liegenden Ritzel (32) verbunden. Dieses wiederum befindet sich mit der Verzahnung (19c) des Sperrelements (19) im Eingriff. Somit lässt sich das Sperrelement wechselweise in zwei Endlagen verfahren, ohne die Drehrichtung des Antriebsmotors (30) zu ändern. Aufgrund der Kinematik des Kurbeltriebs ist das Verstellmoment im Bereich der Endlagen des Sperrelements extrem hoch bei gleichzeitig sehr geringer Belastung des Motors. Mit dem beschriebenen Kurbeltrieb kann also die Drehbewegung eines Getriebemotors in eine reversierende Drehbewegung des Sperrelements umgewandelt werden. Dies erspart einen Elektromotor mit zwei Drehrichtungen. Alle Arten von Elektromotoren können verwendet werden. Das Losbrechmoment des Sperrelements ist durch den Kurbeltrieb besonders hoch, obwohl der Motor nur gering belastet wird.

Abweichend von dem beschriebenen Ausführungsbeispiel mit der rotationssymmetrischen oder kreisförmigen Gehäuseform der Pumpenkammer (17) ist es denkbar und möglich, die Wasserweiche (15) in eine Umwälzpumpe (1) mit einem Pumpengehäuse (23) in von der Kreisform abweichenden Gehäuseform, wie Schneckengehäuseform oder dergl. zu integrieren. Bei einer von der Kreisform abweichenden Gehäuseform besteht das Problem, das sich auf der Kreisbahn bewegende Sperrelement (19) exakt mit definiertem Wand- oder Dichtspalt (29) vor die entsprechenden Druckstutzenöffnungen im Druckraum (18) zu platzieren. Das Problem kann dadurch gelöst werden, wenn beispielsweise zu den abzweigenden Druckstutzen (4 bis 6) hinführende Labyrinthwege im Pumpengehäuse (23) vor den Druckstutzen (4, 5, 6) auf Kreisbahnen mit einem gemeinsamen Drehpunkt angeordnet werden, wobei sich das Sperrelement (19) mit seinen Blendenöffnungen (21) und/oder Verschlusselemente (22) zum Öffnen und/oder Schließen der Druckstutzen in diese Labyrinthe hineinbewegt.

Die lösbaren Verschlusselemente (22) sowie die entsprechenden Öffnungen (28) dafür sind vorzugsweise codiert in verschiedenen Größen ausgeführt, so dass ein falsches Einsetzen versehentlich von Verschlusselementen (22) im Sperrelement (19) vermieden ist. Die Geometrie der Pumpenkammer (17) mit dem Sperrelement (19) und den Druckstutzenquerschnitten ist so gewählt, dass die Umwälzmenge der Pumpe auch während der Druckstutzenverstellung konstant bleibt, das bedeutet, dass beim Verschließen von Druckstutzenquerschnitten gleichgroße Querschnittsöffnungen anderer Druckstutzen gleichermaßen freigegeben werden.

Durch den erfindungsgemäßen Einbau bzw. die Kombination der Wasserweiche mit der Umwälzpumpe gelingt es, den hydraulischen Wirkungsgrad der Wasserwege, insbesondere den der Umwälzpumpe zu verbessern und ein nahezu gleiches Bau- und Totvolumen wie bei einer Umwälzpumpe ohne Wasserweiche zu erreichen. Insbesondere ist kein zusätzliches Bauvolumen im Gerät bereitzustellen, da auch die gleiche Verschlauchung wie bei einer konventionellen Pumpe nutzbar ist. Durch das im Vergleich zu konventionellen Lösungen wesentlich geringere Gesamt-Totvolumen kann der Wasserverbrauch signifikant gesenkt werden. Die Anzahl der Weichenstellungen der Wasserweiche ist durch die vorteilhaften konstruktiven Ausgestaltungen der Erfindung insbesondere durch den im Druckraum der Pumpe vor den abzweigenden Druckstutzen angeordnetem Sperrelement zum Sperren und Freigeben der Druckstutzen für Spülflüssigkeit einfach variierbar. Die sichere Verstellbewegung und lagestabile Festsetzung des Sperrelements in der jeweiligen Wasserweichenstellung besorgt dabei die vorzugsweise außerhalb des Druckraumes befindliche Antriebsvorrichtung für das Sperrelement, die durch den außen am Pumpengehäuse vorgesehenen Elektromotor und das Zahngetriebe realisiert ist. Eine so ausgebildete Umwälz- oder Kreiselpumpe ist auch vorteilhaft überall dort einsetzbar, - also losgelöst von Geschirr- oder Waschmaschinen -, wo Wasserwege eines Wasserverteiler-Systems einzeln, wahlweise oder auch gemeinsam mit Flüssigkeit versorgt werden müssen. Umwälzpumpen nach dieser Erfindung sind auch bei Waschmaschinen verwendbar. Auch können Umwälzpumpen mit Wasserweichen separat im Heizungsbau eingesetzt werden.

## Patentansprüche

1. Geschirrspülmaschine (2) mit Sprüharmen und mit einer Umwälzpumpe (1),
die ein Laufrad, einen Ansaugstutzen (3) und mindestens einen Druckstutzen am Pumpengehäuse aufweist,
mit einer pumpendruckseitig vorgesehenen Wasserweiche (15) zur Herstellung eines Durchflusses von einem Einlass auf einen von mehreren wählbaren, den Sprüharmen zugeordneten, Auslässen,
wobei die Wasserweiche (15) ein Sperrelement (19) mit mindestens einer Blendenöffnung (21) besitzt, welche durch eine Antriebsvorrichtung (20) in mindestens eine Auslassstellung positionierbar ist,
**dadurch gekennzeichnet,**
**dass** die Wasserweiche (15) in die Umwälzpumpe (1) derart integriert ist,
**dass** der Einlass der Wasserweiche (15) durch den Ansaugstutzen (3) der Umwälzpumpe (1) und der Auslass der Wasserweiche (15) durch mehrere Druckstutzen (4,5,6) der Umwälzpumpe (1) gebildet ist, und dass die Geometrie und die Anordnung des Sperrelements (19) in der Umwälzpumpe derart ist, dass durch Drehen des Sperrelements in seine Umfangsrichtung die gewünschte Auslassstellung erreicht wird.

2. Geschirrspülmaschine (2) nach Anspruch 1,
**dadurch gekennzeichnet,**
**dass** das Sperrelement (19) mindestens zwei Blendenöffnungen (21) aufweist, mit denen ein Durchfluss von dem Ansaugstutzen (3) der Umwälzpumpe (1) auf einen oder auf mehrere, en Sprüharmen (7,8,9) zugeordneten, Druckstutzen (4,5,6) einstellbar ist.

3. Geschirrspülmaschine (2) nach mindestens einem der Ansprüche 1 bis 2,
**dadurch gekennzeichnet,**
**dass** die Blendenöffnungen (21) vom Sperrelement (19) und die Öffnungen der Druckstutzen so gewählt sind, dass auch während der Drehung des Sperrelements (19) in eine der Ausgangsstellungen die von dem Sperrelement freigegebenen Querschnittsflächen aller Druckstutzen (4,5,6) in Summe-immer konstant sind.

4. Geschirrspülmaschine (2) nach mindestens einem der Ansprüche 1 bis 3,
**dadurch gekennzeichnet,**
**dass** zwischen den Blendenöffnungen (21) des Sperrelements (19) bewegliche Verschlusselemente (22, 22') ausgebildet sind, welche durch den Pumpendruck in radialer Richtung zum Pumpengehäuse bewegbar sind.

5. Geschirrspülmaschine (2) nach mindestens einem der Ansprüche 1 bis 4,
**dadurch gekennzeichnet,**
**dass** das Sperrelement (19) in seiner Drehrichtung vorzugsweise reversierbar angetrieben ist.

6. Geschirrspülmaschine (2) nach mindestens einem der Ansprüche 1 bis 5,
**dadurch gekennzeichnet,**
**dass** die Wasserweiche (15) in eine Umwälzpumpe (1) mit einer das Laufrad (24) kreiszylindrisch umgebenden Pumpenkammer (17) integriert ist.

7. Geschirrspülmaschine (2) nach mindestens einem der Ansprüche 1 bis 6,
**dadurch gekennzeichnet,**
**dass** die kreiszylindrische Pumpenkammer (17) einen Raum umfasst, der in einen strömungsintensiven Laufradraum (25), in einen diesem Raum nachgeordneten schaufellosen Ringdiffusorraum (26) und in den dem Diffusor nachgeschalteten strömungsberuhigten Druckraum (18) unterteilt ist, von welchem die Druckstutzen (4, 5, 6) abzweigen, und dass neben dem Sperrelement (19) der Wasserweiche (15) ggf. eine vorhandene Heizungseinrichtung (16) im Druckraum (18) angeordnet ist.

8. Geschirrspülmaschine mit Sprüharmen und mit einer Umwälzpumpe (1) nach mindestens einem der Ansprüche 1 bis 7,
**dadurch gekennzeichnet,**
**dass** das Sperrelement (19) der Kreisform der Pumpenkammer (17) entsprechend mit einer wandparallel umlaufenden Sperrelementwand (19b) ausgebildet ist und annähernd formschlüssig in den Druckraum (18) eintaucht, wobei zwischen der Wand der Pumpenkammer (17) und der parallelen Wand des Sperrelements (19) ein Dichtspalt (29) für die beweglichen Verschlusselemente (22, 22') vorgesehen ist.

9. Geschirrspülmaschine (2) mit Sprüharmen und mit einer Umwälzpumpe (1) nach mindestens einem der Ansprüche 1 bis 8,
**dadurch gekennzeichnet,**
**dass** das Sperrelement (19) topfförmig mit einem Boden (19a) oder ringförmig ohne Boden (19a) an der umlaufenden Sperrelementwand (19b) ausgebildet ist.

10. Geschirrspülmaschine (2) mit Sprüharmen und mit einer Umwälzpumpe (1) nach mindestens einem der Ansprüche 1 bis 9,
**dadurch gekennzeichnet,**
**dass** die Druckstutzen (4, 5, 6) sowie die Blendenöffnungen (21) und die Verschlusselemente (22, 22') radial oder axial angeordnet sind.

11. Geschirrspülmaschine (2) nach mindestens einem der Ansprüche 1 bis 10,
**dadurch gekennzeichnet,**
**dass** die Verschlusselemente (22) als separat in vorgesehene Öffnungen (28) der Sperrelementwand (19b) formschlüssig einsteckbare Losteile ausgebildet sind.

12. Geschirrspülmaschine (2) nach mindestens einem der Ansprüche 1 bis 11,
**dadurch gekennzeichnet,**
**dass** die Verschlusselemente (22) mit Schnapp- oder Rastverbindungen zur unverlierbaren Befestigung am Sperrelement (19) ausgebildet sind.

13. Geschirrspülmaschine (2) nach mindestens einem der Ansprüche 1 bis 12,
**dadurch gekennzeichnet,**
**dass** die Verschlusselemente (22, 22') mit dem Sperrelement (19) einstückig ausgebildet sind.

14. Geschirrspülmaschine (2) nach mindestens einem der Ansprüche 1 bis 13,
**dadurch gekennzeichnet,**
**dass** die Verschlusselemente (22') in Form von Folienscharnieren oder dergl. am Sperrelement (19) angebunden sind.

15. Geschirrspülmaschine (2) nach mindestens einem der Ansprüche 1 bis 14,
**dadurch gekennzeichnet,**
**dass** die einstückig mit dem Sperrelement (19) ausgebildeten Verschlusselemente (22) in der Sperrelementwand (19b) freigeschnittene federnde Ventilelemente (22') sind.

16. Geschirrspülmaschine (2) nach mindestens einem der Ansprüche 1 bis 15,
**dadurch gekennzeichnet,**
**dass** die Antriebsvorrichtung (20) für das Sperrelement (19) durch einen am Pumpengehäuse (23) vorgesehenen Elektromotor (30) mit ggf. nachgeschaltetem Getriebe (31) realisiert ist, welches das Sperrelement (19) bewegt.

17. Geschirrspülmaschine (2) nach mindestens einem der Ansprüche 1 bis 16,
**dadurch gekennzeichnet,**
**dass** das Sperrelement (19) mit einer die Pumpenkammer (17) durchdringenden Verzahnung (19c) versehen ist, welche mit einem Ritzel (32) des Getriebes (31) außerhalb der Pumpenkammer (17) in einem nach außen hin abgedichteten Getrieberaum (34) der Antriebsvorrichtung (20) am Pumpengehäuse (23) kämmt, wobei die Antriebsachse (35) des Ritzels (32) flüssigkeitsdicht aus dem Pumpengehäuse (23) zur Ankopplung des Elektromotors (30) herausgeführt ist.

18. Geschirrspülmaschine (2) nach mindestens einem der Ansprüche 1 bis 17,
**dadurch gekennzeichnet,**
**dass** die Drehbewegung des Sperrelements (19) durch einen zwischen dem Getriebe (31) und dem Elektromotor (30) angeordneten Kurbeltrieb (36) erfolgt, wobei der Kurbeltrieb (36) aus einer vom Elektromotor (30) antreibbaren Kurbelscheibe (37) in Wirkverbindung mit einem Pleueltrieb (38) besteht, welcher mit der Antriebsachse (35) des Ritzels (32) des Zahngetriebes (31) drehverbunden ist.

19. Geschirrspülmaschine (2) nach mindestens einem der Ansprüche 1 bis 18,
**dadurch gekennzeichnet,**
**dass** die Wasserweiche (15) mit einer Einrichtung zur mechanischen oder elektrischen Lagesensierung und/oder Endlagenabschaltung des Sperrelements (19) versehen ist.

20. Geschirrspülmaschine (2) mit Sprüharmen und mit einer Umwälzpumpe (1) nach mindestens einem der Ansprüche 1 bis 19,
**dadurch gekennzeichnet,**
**dass** zur Sensierung der Drehlage des Sperrelements (19) am Umfang der Kurbelscheibe (37), am Zahnritzel (32) oder dergl. ein oder mehrere Schaltnocken, Magnete oder dergl. angeordnet sind, welche zugeordnete Schalter berührungslos oder durch Kontakt zur Steuerung der Drehbewegung des Sperrelements (19) beeinflussen.

## Claims

1. Dishwasher (2) having spray arms and a circulation pump (1), which has an impeller, a suction port (3) and at least one discharge port on the pump housing, and having a water diverter (15) provided on the delivery side of the pump to produce a flow from an inlet to one of a plurality of selectable outlets associated with the spray arms, the water diverter (15) having a blocking element (19) with at least one diaphragm opening (21) which can be positioned by a drive device (20) in at least one outlet position,
**characterised in that**
the water diverter (15) is integrated into the circulation pump (1) in such a way that the inlet of the water diverter (15) is formed by the suction port (3) of the circulation pump (1) and the outlet of the water diverter (15) is formed by a plurality of discharge ports (4, 5, 6) of the circulation pump (1) and **in that** the geometry and arrangement of the blocking element (19) in the circulation pump are such that the desired outlet position is reached by rotating the blocking element in its circumferential direction.

2. Dishwasher (2) according to claim 1,
**characterised in that**
the blocking element (19) has at least two diaphragm openings (21) with which a flow can be adjusted from the suction port (3) of the circulation pump (1) to one or more discharge ports (4, 5, 6) associated with the spray arms (7, 8, 9).

3. Dishwasher (2) according to at least one of claims 1 to 2, **characterised in that**
the diaphragm openings (21) of the blocking element (19) and the openings of the discharge ports are so selected that the cross-sectional areas of all the discharge ports (4, 5, 6) freed by the blocking element are always constant in total even while the blocking element (19) is being rotated into one of the output positions.

4. Dishwasher (2) according to at least one of claims 1 to 3, **characterised in that**
between the diaphragm openings (21) of the blocking element (19) are formed moveable closure elements (22, 22') which can be moved in the radial direction towards the pump housing by the pump pressure.

5. Dishwasher (2) according to at least one of claims 1 to 4, **characterised in that**
the blocking element (19) is preferably driven so that its direction of rotation may be reversed.

6. Dishwasher (2) according to at least one of claims 1 to 5, **characterised in that**
the water diverter (15) is integrated into a circulation pump (1) which has a pump chamber (17) surrounding the impeller (24) in the manner of a circular cylinder.

7. Dishwasher (2) according to at least one of claims 1 to 6, **characterised in that**
the circular cylindrical pump chamber (17) encloses a space which is subdivided into a flow-intensive impeller chamber (25), a vaneless ring diffuser chamber (26) located downstream from said chamber and a flow-steadied pressure chamber (18) located downstream from the diffuser and from which the discharge ports (4, 5, 6) branch off, and **in that** a heating device (16) is optionally also arranged in the pressure chamber (18) beside the blocking element (19) of the water diverter (15).

8. Dishwasher (2) having spray arms and a circulation pump (1) according to at least one of claims 1 to 7, **characterised in that**
the blocking element (19) is configured, corresponding to the circular shape of the pump chamber (17), with a wall-parallel circumferential blocking element wall (19b) and plunges almost as a form-fit into the pressure chamber (18), a sealing gap (29) for the moveable closure elements (22, 22') being provided between the wall of the pump chamber (17) and the parallel wall of the blocking element (19).

9. Dishwasher (2) having spray arms and a circulation pump (1) according to at least one of claims 1 to 8, **characterised in that**
the blocking element (19) is configured in the shape of a pot with a base (19a) or as a ring without a base (19a) on the circumferential blocking element wall (19b).

10. Dishwasher (2) having spray arms and a circulation pump (1) according to at least one of claims 1 to 9, **characterised in that**
the discharge ports (4, 5, 6) as well as the diaphragm openings (21) and the closure elements (22, 22') are arranged radially or axially.

11. Dishwasher (2) according to at least one of claims 1 to 10, **characterised in that**
the closure elements (22) are in the form of loose parts which can be inserted separately as a form-fit in openings (28) provided in the blocking element wall (19b).

12. Dishwasher (2) according to at least one of claims 1 to 11, **characterised in that**
the closure elements (22) are configured with snap-on or locking connections for permanent attachment to the blocking element (19).

13. Dishwasher (2) according to at least one of claims 1 to 12, **characterised in that**
the closure elements (22, 22') are formed as one piece with the blocking element (19).

14. Dishwasher (2) according to at least one of claims 1 to 13, **characterised in that**
the closure elements (22') in the form of film hinges or the like are attached to the blocking element (19).

15. Dishwasher (2) according to at least one of claims 1 to 14, **characterised in that**
the closure elements (22) formed as one piece with the blocking element (19) are resilient valve elements (22') which have been cut out of the blocking element wall (19b).

16. Dishwasher (2) according to at least one of claims 1 to 15, **characterised in that**
the drive device (20) for the blocking element (19) is realised by an electric motor (30) provided on the pump housing (23), possibly with a downstream gear system (31), said motor moving the blocking element (19).

17. Dishwasher (2) according to at least one of claims 1 to 16, **characterised in that**
the blocking element (19) is provided with toothing (19c) which penetrates the pump chamber (17) and meshes with a pinion (32) of the gear system (31) outside the pump chamber (17) in a gear chamber (34), sealed towards the outside, of the drive device (20) on the pump housing (23), the drive axle (35) of the pinion (32) being led out of the pump housing (23) in a liquid-tight manner for coupling to the electric motor (30).

18. Dishwasher (2) according to at least one of claims 1 to 17, **characterised in that**
the rotational movement of the blocking element (19) is effected by a crank gear (36) arranged between the gear system (31) and the electric motor (30), the crank gear (36) comprising a crank disc (37) which can be driven by the electric motor (30) and is operationally coupled to a connecting rod (38) which is rotatably connected to the drive axle (35) of the pinion (32) of the toothed gear system (31).

19. Dishwasher (2) according to at least one of claims 1 to 18, **characterised in that**
the water diverter (15) is provided with a device for mechanically or electrically detecting the position of the blocking element (19) and/or switching it off in its end position.

20. Dishwasher (2) having spray arms and a circulation pump (1) according to at least one of claims 1 to 19, **characterised in that**
for detecting the rotational position of the blocking element (19), one or more trip cams or the like are arranged on the circumference of the crank disc (37), on the pinion (32) or the like and influence associated switches, in a non-contact manner or by means of contact, to control the rotational movement of the blocking element (19).

## Revendications

1. Lave-vaisselle (2) avec des bras gicleurs et une pompe de circulation (1) qui présente un rotor, un raccord d'aspiration (3) et au moins un raccord de refoulement sur le carter de pompe,
avec un distributeur d'eau (15) prévu côté refoulement de la pompe pour établir une circulation d'une entrée vers une parmi plusieurs sorties sélectionnables, associées aux bras gicleurs,
le distributeur d'eau (15) possédant un élément d'arrêt (19) avec au moins une ouverture (21) qui peut être positionnée dans au moins une position de sortie par un dispositif d'entraînement (20),
**caractérisé par le fait**
**que** le distributeur d'eau (15) est intégré dans la pompe de circulation (1) de telle manière que l'entrée du distributeur d'eau (15) est formée par le raccord d'aspiration (3) de la pompe de circulation (1) et la sortie du distributeur d'eau (15) par plusieurs raccords de refoulement (4, 5, 6) de la pompe de circulation (1), et que la géométrie et la disposition de l'élément d'arrêt (19) dans la pompe de circulation sont telles que l'on atteint la position de sortie souhaitée en tournant l'élément d'arrêt dans sa direction circonférentielle.

2. Lave-vaisselle (2) selon la revendication 1,
**caractérisé par le fait**
**que** l'élément d'arrêt (19) présente au moins deux ouvertures (21) avec lesquelles il est possible de régler une circulation du raccord d'aspiration (3) de la pompe de circulation (1) vers un ou plusieurs raccords de refoulement (4, 5, 6) associés aux bras gicleurs (7, 8, 9).

3. Lave-vaisselle (2) selon au moins l'une des revendications 1 à 2,
**caractérisé par le fait**
**que** les ouvertures (21) de l'élément d'arrêt (19) et les ouvertures des raccords de refoulement sont choisies de telle manière que les surfaces de section de tous les raccords de refoulement (4, 5, 6) qui sont libérées par l'élément d'arrêt soient toujours constantes en somme même pendant la rotation de l'élément d'arrêt (19) dans une des positions de départ.

4. Lave-vaisselle (2) selon au moins l'une des revendications 1 à 3,
**caractérisé par le fait**
**qu'**entre les ouvertures (21) de l'élément d'arrêt (19) sont formés des éléments de fermeture déplaçables (22, 22') qui peuvent être déplacés en direction radiale par rapport au carter de pompe par la pression de pompe.

5. Lave-vaisselle (2) selon au moins l'une des revendications 1 à 4,
**caractérisé par le fait**
**que** l'élément d'arrêt (19) est entraîné dans sa direction de rotation de préférence de manière réversible.

6. Lave-vaisselle (2) selon au moins l'une des revendications 1 à 5,
**caractérisé par le fait**
**que** le distributeur d'eau (15) est intégré dans une pompe de circulation (1) avec une chambre de pompe (17) entourant de manière cylindrique circulaire le rotor (24).

7. Lave-vaisselle (2) selon au moins l'une des revendications 1 à 6,
**caractérisé par le fait**
**que** la chambre de pompe (17) cylindrique circulaire comprend une chambre qui est divisée en une chambre de rotor (25) à écoulement intense, en une chambre de diffusion annulaire (26) sans ailettes placée après cette chambre et en une chambre de refoulement (18) à écoulement tranquillisé placée après le diffuseur de laquelle bifurquent les raccords de refoulement (4, 5, 6), et qu'un dispositif de chauffage (16) éventuellement présent est disposé en plus de l'élément d'arrêt (19) du distributeur d'eau (15) dans la chambre de refoulement (18).

8. Lave-vaisselle avec des bras gicleurs et une pompe de circulation (1) selon au moins l'une des revendications 1 à 7,
**caractérisé par le fait**
**que** l'élément d'arrêt (19) est formé d'une manière correspondante à la forme circulaire de la chambre de pompe (17) avec une paroi d'élément d'arrêt (19b) faisant le tour parallèlement à la paroi et s'enfonce approximativement par ajustement géométrique dans la chambre de refoulement (18), un jeu d'étanchéité (29) étant prévu pour les éléments de fermeture déplaçables (22, 22') entre la paroi de la chambre de pompe (17) et la paroi parallèle de l'élément d'arrêt (19).

9. Lave-vaisselle (2) avec des bras gicleurs et une pompe de circulation (1) selon au moins l'une des revendications 1 à 8,
**caractérisé par le fait**
**que** l'élément d'arrêt (19) est réalisé en forme de pot avec un fond (19a) ou en forme d'anneau sans fond (19a) sur la paroi d'élément d'arrêt (19b) circonférentielle.

10. Lave-vaisselle (2) avec des bras gicleurs et une pompe de circulation (1) selon au moins l'une des revendications 1 à 9,
**caractérisé par le fait**
**que** les raccords de refoulement (4, 5, 6) ainsi que les ouvertures (21) et les éléments de fermeture (22, 22') sont disposés radialement ou axialement.

11. Lave-vaisselle (2) selon au moins l'une des revendications 1 à 10,
**caractérisé par le fait**
**que** les éléments de fermeture (22) sont réalisés sous forme de pièces mobiles insérables séparément par ajustement géométrique dans des ouvertures (28) prévues de la paroi d'élément d'arrêt (19b).

12. Lave-vaisselle (2) selon au moins l'une des revendications 1 à 11,
**caractérisé par le fait**
**que** les éléments de fermeture (22) sont réalisés avec des liaisons à cliquet ou à encoches pour la fixation imperdable à l'élément d'arrêt (19).

13. Lave-vaisselle (2) selon au moins l'une des revendications 1 à 12,
**caractérisé par le fait**
**que** les éléments de fermeture (22, 22') sont réalisés d'une seule pièce avec l'élément d'arrêt (19).

14. Lave-vaisselle (2) selon au moins l'une des revendications 1 à 13,
**caractérisé par le fait**
**que** les éléments de fermeture (22') sont attachés à l'élément d'arrêt (19) sous la forme de charnières films ou analogues.

15. Lave-vaisselle (2) selon au moins l'une des revendications 1 à 14,
**caractérisé par le fait**
**que** les éléments de fermeture (22) réalisés d'une seule pièce avec l'élément d'arrêt (19) sont des éléments de clapet (22') souples dégagés par découpage dans la paroi d'élément d'arrêt (19b).

16. Lave-vaisselle (2) selon au moins l'une des revendications 1 à 15,
**caractérisé par le fait**
**que** le dispositif d'entraînement (20) pour l'élément d'arrêt (19) est réalisé par un moteur électrique (30) prévu sur le carter de pompe (23), avec un mécanisme de transmission (31) éventuellement placé en aval, qui déplace l'élément d'arrêt (19).

17. Lave-vaisselle (2) selon au moins l'une des revendications 1 à 16,
**caractérisé par le fait**
**que** l'élément d'arrêt (19) est muni d'une denture (19c) traversant la chambre de pompe (17) qui engrène avec un pignon (32) du mécanisme de transmission (31) à l'extérieur de la chambre de pompe (17) dans une chambre de mécanisme de transmission (34) étanchéifiée vers l'extérieur du dispositif d'entraînement (20) sur le carter de pompe (23), l'axe d'entraînement (35) du pignon (32) étant sorti du carter de pompe (23) de manière étanche aux liquides pour le couplage du moteur électrique (30).

18. Lave-vaisselle (2) selon au moins l'une des revendications 1 à 17,
**caractérisé par le fait**
**que** le mouvement de rotation de l'élément d'arrêt (19) est réalisé par un mécanisme à manivelle (36) disposé entre le mécanisme de transmission (31) et le moteur électrique (30), le mécanisme à manivelle (36) étant constitué d'un plateau de manivelle (37) pouvant être entraîné par le moteur électrique (30) en interaction avec un mécanisme à bielle (38) qui est solidaire en rotation avec l'axe d'entraînement (35) du pignon (32) de l'engrenage (31).

19. Lave-vaisselle (2) selon au moins l'une des revendications 1 à 18,
**caractérisé par le fait**
**que** le distributeur d'eau (15) est muni d'un dispositif de détection mécanique ou électrique de la position et/ou d'une coupure en fin de course de l'élément d'arrêt (19).

20. Lave-vaisselle (2) avec des bras gicleurs et une pompe de circulation (1) selon au moins l'une des revendications 1 à 19,
**caractérisé par le fait**
**que** pour détecter la position de rotation de l'élément d'arrêt (19) sur la circonférence du plateau de manivelle (37), une ou plusieurs cames de commutation, aimants ou analogues sont disposés sur le pignon (32) ou analogue, lesquels influencent des commutateurs associés sans contact ou par contact pour la commande du mouvement de rotation de l'élément d'arrêt (19).
